# EUROPÄISCHE PATENTSCHRIFT

(11) **EP 2 837 263 B1**
(45) Veröffentlichungstag und Bekanntmachung des Hinweises auf die Patenterteilung: **14.06.2017**
(21) Anmeldenummer: 13727021.1
(22) Anmeldetag: 15.04.2013
(51) Int. Cl.: H02M 7/06, H05B 37/02, H02M 1/42, H05B 33/08, H05B 41/28

(54) **VERFAHREN ZUM STEUERN EINER LEISTUNGSFAKTORKORREKTURSCHALTUNG, LEISTUNGSFAKTORKORREKTURSCHALTUNG UND BETRIEBSGERÄT FÜR EIN LEUCHTMITTEL**
METHOD FOR CONTROLLING A POWER FACTOR CORRECTION CIRCUIT, POWER FACTOR CORRECTION CIRCUIT AND OPERATING DEVICE FOR AN ILLUMINANT
PROCÉDÉ DE COMMANDE D'UN CIRCUIT DE CORRECTION DE FACTEUR DE PUISSANCE, CIRCUIT DE CORRECTION DE FACTEUR DE PUISSANCE ET APPAREIL DE FONCTIONNEMENT POUR UN MOYEN D'ÉCLAIRAGE

(30) Priorität: 13.04.2012 DE 102012007479
(43) Veröffentlichungstag der Anmeldung: 18.02.2015
(73) Patentinhaber: Tridonic GmbH & Co. KG, 6851 Dornbirn (AT)
(72) Erfinder: AUER, Hans, A-6850 Dornbirn (AT); LAMPERT, Peter, A-6800 Feldkirch (AT)
(74) Vertreter: Banzer, Hans-Jörg
(86) Internationale Anmeldenummer: PCT/AT2013/000070
(87) Internationale Veröffentlichungsnummer: WO 2013/152372

(56) Entgegenhaltungen:
- WO-A1-2011/018324
- WO-A2-2011/009717
- DE-A1-102008 027 029
- DE-A1-102009 047 984
- US-A- 5 619 405

## Beschreibung

Die Erfindung betrifft ein Verfahren und eine Schaltung zur Leistungsfaktorkorrektur. Insbesondere betrifft die Erfindung das technische Gebiet der Leistungsfaktorkorrektur für den Einsatz bei Betriebsgeräten oder elektronischen Vorschaltgeräten für Leuchtmittel.

Eine Leistungsfaktorkorrektur ("Power Factor Correction", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrekturschaltung entgegengewirkt werden.

Leistungsfaktorkorrekturschaltungen werden auch bei Betriebsgeräten für Leuchtmittel, beispielsweise bei elektronischen Vorschaltgeräten für Fluoreszenzleuchtmittel oder bei LED-Konvertern, eingesetzt. Die Verwendung derartiger Schaltungen bei Geräten zum Betreiben von Leuchtmitteln ist sinnvoll, da Normen die zulässige Rücksendung von Oberwellen in das Versorgungsnetz beschränken.

Für Leistungsfaktorkorrekturschaltungen wird häufig eine Schaltungstopologie verwendet, die auf einem auch als Hochsetzsteller oder Aufwärtswandler bezeichneten Boost-Konverter beruht. Dabei wird eine mit einer gleichgerichteten Wechselspannung versorgte Induktivität oder Spule durch Einschalten/Ausschalten eines steuerbaren Schalters mit einem Eingangsstrom geladen bzw. entladen. Der Entladestrom der Induktivität fließt über eine Diode zu dem mit einer Ausgangskapazität gekoppelten Ausgang des Konverters, so dass am Ausgang eine gegenüber der Eingangsspannung erhöhte Gleichspannung abgegriffen werden kann. Andere Konverterarten können ebenfalls verwendet werden.

Leistungsfaktorkorrekturschaltungen können in verschiedenen Betriebsmodi betrieben werden. Insbesondere ist ein Betrieb mit einem kontinuierlichen Strom durch die zuvor erwähnte Induktivität (so genannter "Continuous Conduction Mode", CCM), ein Betrieb mit einem diskontinuierlichen Induktivitätsoder Spulenstrom ("Discontinuous Conduction Mode", DCM) oder ein Betrieb im Grenzbereich zwischen kontinuierlichem und diskontinuierlichem Strom durch die Induktivität ("Borderline Conduction Mode" oder "Boundary Conduction Mode", BCM) bekannt. Beim BCM-Betrieb kann ein Abfallen des Spulenstroms auf Null während der Entladephase der Spule als Anlass dafür genommen, einen neuen Schaltzyklus zu starten und den Schalter wieder einzuschalten, um die Spule erneut zu laden. Über die Dauer der Zeit, während der der Schalter jeweils eingeschaltet ist, kann die Leistungsfaktorkorrekturschaltung gesteuert oder geregelt werden. Im DCM-Betrieb wird hingegen nach einem Nulldurchgang des Spulenstroms während der Entladephase zunächst eine vorgegeben zusätzliche Wartezeit abgewartet werden, bis der Schalter erneut geschlossen wird.

Die DE 10 2004 025 597 A1 beschreibt eine Leistungsfaktorkorrekturschaltung, bei der während der Ausschalt-Zeitdauer des Schalters eine Ausgangs-Gleichspannung hergeleitet wird.

Die DE 10 2009 047 984 A1, die als Basis für den Oberbegriff der unabhängigen Patentansprüche dient, offenbart ein Verfahren und eine Schaltung zur Leistungsfaktorkorrektur, die für einen lückenden und einen nicht-lückenden Betrieb eingerichtet sein können.

Die DE 10 2008 027 029 A1, die WO 2011/009717 A1 und die US 5 619 405 A offenbaren weitere Beispiele für Leistungsfaktorkorrekturschaltungen.

Die WO 2011/018324 A1 offenbart einen Wandler mit Überspannungsschutz.

Bei einem Betrieb einer Leistungsfaktorkorrekturschaltung im DCM-Modus kann die Wartezeit vor einem erneuten Einschalten des Wandlers abhängig von einer Last, d.h. abhängig von einer Ausgangsleistung der Leistungsfaktorkorrekturschaltung, gewählt werden, um eine vorgegebene Busspannung zu halten. Wird der Schalter unmittelbar nach Ablauf dieser Zeit wieder eingeschaltet, kann dies zu Irregularitäten im Spulenstrom führen. Wird der Einschaltzeitpunkt nur abhängig von der vorgegebenen Wartezeit und unabhängig vom Verhalten der Leistungsfaktorkorrekturschaltung gewählt, kann auch eine erhöhte Dissipation und somit ein Erwärmen des Schaltmittels auftreten.

Aufgabe ist, Verfahren und Vorrichtungen anzugeben, die Verbesserungen im Hinblick auf die genannten Probleme bieten. Aufgabe ist, Verfahren und Vorrichtungen zur Leistungsfaktorkorrektur anzugeben, bei denen ein Betrieb über einen größeren Bereich von Lasten möglich ist. Aufgabe ist auch, Verfahren und Vorrichtungen anzugeben, bei denen das dynamische Verhalten der Leistungsfaktorkorrekturschaltung während des Zeitraums, in dem der Schalter im Aus-Zustand ist, bei der Bestimmung des Einschaltzeitpunkts berücksichtigt werden kann.

Erfindungsgemäß werden ein Verfahren, eine Leistungsfaktorkorrekturschaltung und ein Betriebsgerät für ein Leuchtmittel mit den in den unabhängigen Ansprüchen angegebenen Merkmalen angegeben. Die abhängigen Ansprüche definieren vorteilhafte und bevorzugte Ausführungsformen der Erfindung.

Bei Verfahren und Vorrichtungen nach Ausführungsbeispielen kann eine Leistungsfaktorkorrekturschaltung für ein Leuchtmittel in mehreren Betriebsmodi betrieben werden. Abhängig von einer Last, die beispielsweise über die Ausgangsleistung detektiert werden kann, kann ein Betriebsmodus aus mehreren Betriebsmodi ausgewählt werden. In einem ersten Betriebsmodus, der ein DCM-Betriebsmodus sein kann, wird eine Mindestwartezeit zwischen dem Ausschalten des Schaltmittels und einem erneuten Einschalten des Schaltmittels bestimmt. Ein Einschaltzeitpunkt für das Schaltmittel wird nicht nur abhängig von der Mindestwartezeit, sondern auch abhängig von einer über das Schaltmittel abfallenden Spannung festgelegt. Dies erlaubt eine Berücksichtigung des dynamischen Verhaltens der Leistungsfaktorkorrekturschaltung während des Aus-Zustands des Schaltmittels zur Bestimmung des Einschaltzeitpunkts. Bei einer Leistungsfaktorkorrekturschaltung nach einem Ausführungsbeispiel ist eine Steuereinrichtung ausgestaltet, um das entsprechende Verfahren auszuführen.

Das Schaltmittel kann ein Leistungsschalter, insbesondere ein FET oder MOSFET sein, und die über das Schaltmittel abfallende Spannung kann die Drain-Source-Spannung des Leistungsschalters sein, während der Leistungsschalter in den Aus-Zustand geschaltet ist.

Die Steuereinrichtung der Leistungsfaktorkorrekturschaltung kann den Einschaltzeitpunkt abhängig von dem zeitabhängigen Verhalten der über die Drain-Source-Strecke des Leistungsschalters abfallenden Spannung festlegen. Die Steuereinrichtung der Leistungsfaktorkorrekturschaltung kann Zeitfenster definieren, die zulässigen Einschaltzeiten entsprechen und die jeweils bei den Zeiten liegen, an denen die über die Drain-Source-Strecke des Leistungsschalters abfallenden Spannung sich einem lokalen Minimum nähert oder dieses durchläuft. D.h., der Schalter wird nur eingeschaltet, wenn nicht nur die Mindestwartezeit abgelaufen ist, sondern sich die Spannung am Schaltmittel in einem "Tal" befindet. Eine solche Vorgehensweise wird auch als "Valley Switching" bezeichnet.

Die Steuereinrichtung der Leistungsfaktorkorrekturschaltung kann Informationen über die Spannung an der Drain-Source-Strecke des Schaltmittels bzw. dessen Veränderung auf verschiedene Weise erhalten. Bei einer Ausgestaltung kann der durch die Induktivität der Leistungsfaktorkorrekturschaltung fließende Strom erfasst und der Zeitpunkt, an dem die Spannung an der Drain-Source-Strecke des Schaltmittels ein Extremum aufwiest, abhängig von einem Vergleich des Stroms durch die Spule mit einem Referenzwert bestimmt werden. Der Steuereinrichtung kann ein entsprechendes Messsignal zugeführt werden, das den Strom in der Spule bzw. dessen Nulldurchgänge anzeigt. Das Messsignal kann so erzeugt werden, dass es Nulldurchgänge des Spulenstroms und deren Richtung anzeigt. Ein lokales Minimum bzw. Tal der Spannung am Schaltmittel kann abhängig von einem Nulldurchgang des Spulenstroms in einer bestimmten Richtung erkannt werden.

Zur Detektion des Nulldurchgangs des Stroms kann eine entsprechende Erfassungsschaltung vorgesehen sein, mit der beispielsweise über eine Windung der Spulenstroms erfasst und mit einem Referenzwert verglichen wird.

Die Steuereinrichtung der Leistungsfaktorkorrekturschaltung kann abhängig von der Last bzw. Ausgangsleistung der Leistungsfaktorkorrekturschaltung einen Übergang zwischen dem ersten Betriebsmodus und einem zweiten Betriebsmodus vornehmen. Der zweite Betriebsmodus kann ein CCM-Betrieb oder BCM-Betrieb sein. Im zweiten Betriebsmodus kann die Leistungsfaktorkorrekturschaltung durch Einstellen der Ein-Zeit, während der das Schaltmittel jeweils eingeschaltet wird, gesteuert oder geregelt werden. Im ersten Betriebsmodus kann die Leistungsfaktorkorrekturschaltung durch Einstellen der Mindestwartezeit gesteuert oder geregelt werden. Im ersten Betriebsmodus kann die Ein-Zeit, während der das Schaltmittel jeweils eingeschaltet wird, gleich Wert gewählt werden, der dem Minimalwert der in dem zweiten Betriebsmodus zulässigen Ein-Zeiten entspricht. Die Mindestwartezeit kann nur im ersten Betriebsmodus für die Steuerung der Leistungsfaktorkorrekturschaltung definiert und verwendet werden.

Wenn die Steuereinrichtung der Leistungsfaktorkorrekturschaltung erkennt, dass die Last bzw. Ausgangsleistung unter einen Schwellenwert abfällt, kann die Steuereinrichtung automatisch vom zweiten Betriebsmodus in den ersten Betriebsmodus wechseln.

Die Leistungsfaktorkorrekturschaltung nach Ausführungsbeispielen kann insbesondere zur Leistungsfaktorkorrektur für einen Wechselspannung/Gleichspannung-Wandler verwendet werden, so dass es sich in diesem Fall bei der Eingangsspannung um eine gleichgerichtete Wechselspannung und bei der Ausgangsspannung um eine Gleichspannung handelt. Die Leistungsfaktorkorrekturschaltung nach Ausführungsbeispielen kann gemäß der Topologie eines Boost-Konverters aufgebaut sein, so dass der Entladestrom der Induktivität über eine Diode dem mit einer Ausgangskapazität gekoppelten Ausgangsanschluss zugeführt wird. Die beschriebenen Verfahren und Ausgestaltungen sind auch auf andere Konverter-Topologien anwendbar.

Bei jedem der Ausführungsbeispiele kann im ersten Betriebsmodus, beispielsweise im DCM-Betriebsmodus, ein Einschaltzeitpunkt so gewählt werden, dass kumulativ die folgenden drei Bedingungen erfüllt sind: die Mindestwartezeit ist abgelaufen; der Strom durch die Induktivität ist an einem Nulldurchgang; und die Drain-Source-Spannung des Schaltmittels ist auf ein lokales Minimum abgefallen.

Die Steuereinrichtung kann in Form einer integrierten Schaltung, insbesondere einer anwendungsspezifischen Spezialschaltung (ASIC, "Application Specific Integrated Circuit"), ausgestaltet sein. Die Steuereinrichtung kann einen gemeinsamen Messeingang zum Erfassen einer dem Spulenstrom bzw. einem Nulldurchgang dieses Stroms entsprechenden Messgröße aufweisen, die auch zur Bestimmung der Zeitfenster verwendet wird, die einem lokalen Minimum bzw. der über das Schaltmittel abfallenden Spannung entsprechen.

Verfahren und Leistungsfaktorkorrekturschaltung können bei einem Betriebsgerät für ein Leuchtmittel, beispielsweise für ein elektronisches Vorschaltgerät für eine Fluoreszenzleuchtmittel oder für einen LED-Konverter verwendet werden. Bei diesem Anwendungsfall ermöglichen Ausführungsbeispiele der Erfindung, dass eine Anpassung über einen weiten Bereich unterschiedlicher Leistungsniveaus oder Komponenten des jeweils verwendeten Betriebsgerät möglich ist und dabei energieeffizientes Schalten auch in einem DCM-Betriebsmodus erreicht wird.

Die Erfindung wird nachfolgend unter Bezugnahme auf die Zeichnungen anhand bevorzugter Ausführungsformen erläutert.
FIG. 1 zeigt ein Beleuchtungssystem mit einer Leistungsfaktorkorrekturschaltung nach einem Ausführungsbeispiel.
FIG. 2 zeigt ein Schaltbild einer Leistungsfaktorkorrekturschaltung nach einem Ausführungsbeispiel.
FIG. 3 zeigt Ströme und Spannungen zur Erläuterung der Funktionsweise der Leistungsfaktorkorrekturschaltung nach einem Ausführungsbeispiel in einem zweiten Betriebsmodus, der ein BCM-Betrieb sein kann.
FIG. 4 zeigt Ströme und Spannungen zur Erläuterung der Funktionsweise der Leistungsfaktorkorrekturschaltung nach einem Ausführungsbeispiel in einem ersten Betriebsmodus, der ein DCM-Betrieb ist.
FIG. 5 zeigt Ströme und Spannungen zur Erläuterung der Funktionsweise der Leistungsfaktorkorrekturschaltung nach einem Ausführungsbeispiel im ersten Betriebsmodus.
FIG. 6 zeigt schematisch einen Strom durch eine Spule, wenn ein Schaltmittel unmittelbar nach Ablauf einer fixen Wartezeit wieder eingeschaltet wird.
FIG. 7 illustriert die Funktionsweise der Leistungsfaktorkorrekturschaltung nach einem Ausführungsbeispiel im ersten Betriebsmodus.
FIG. 8 illustriert die Funktionsweise der Leistungsfaktorkorrekturschaltung nach einem Ausführungsbeispiel im ersten Betriebsmodus.
FIG. 9 und FIG. 10 illustrieren eine Parameteranpassung durch eine Steuereinrichtung der Leistungsfaktorkorrekturschaltung nach einem Ausführungsbeispiel.

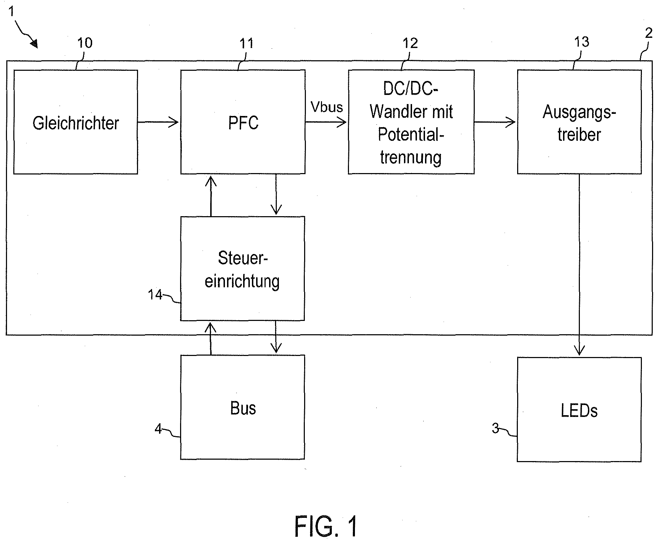

FIG. 1 zeigt eine Blockdiagrammdarstellung eines Beleuchtungssystems 1, das ein Betriebsgerät 2 für ein Leuchtmittel 3, beispielsweise für LEDs umfasst. Das Betriebsgerät 2 kann mit einem Bus 4 oder einem Drahtloskommunikationssystem verbunden sein, um Dimmbefehle zu empfangen und/oder Statusmeldungen auszugeben.

Das Betriebsgerät 2 kann beispielsweise als elektronisches Vorschaltgerät (EVG) für eine Gasentladungslampe, Leuchtstofflampe oder ein anderes Fluoreszenzleuchtmittel oder als LED-Konverter ausgestaltet sein. Das Betriebsgerät 2 weist einen Gleichrichter 10 zum Gleichrichten einer Versorgungsspannung, beispielsweise der Netzspannung auf. Das Betriebsgerät 2 weist eine Schaltung zur Leistungsfaktorkorrektur 11 mit zugeordneter Steuereinrichtung 14 auf. Die Leistungsfaktorkorrekturschaltung stellt eine Ausgangsspannung für nachgeschaltete Komponenten des Betriebsgeräts 2 bereit, die auch als Busspannung Vbus bezeichnet wird. Eine weitere Spannungsumsetzung und/oder Dimmfunktionen können beispielsweise über einen DC/DC-Wandler 12, der als LLC-Resonanzwandler ausgestaltet sein kann, und/oder einen Ausgangstreiber 13 erreicht werden.

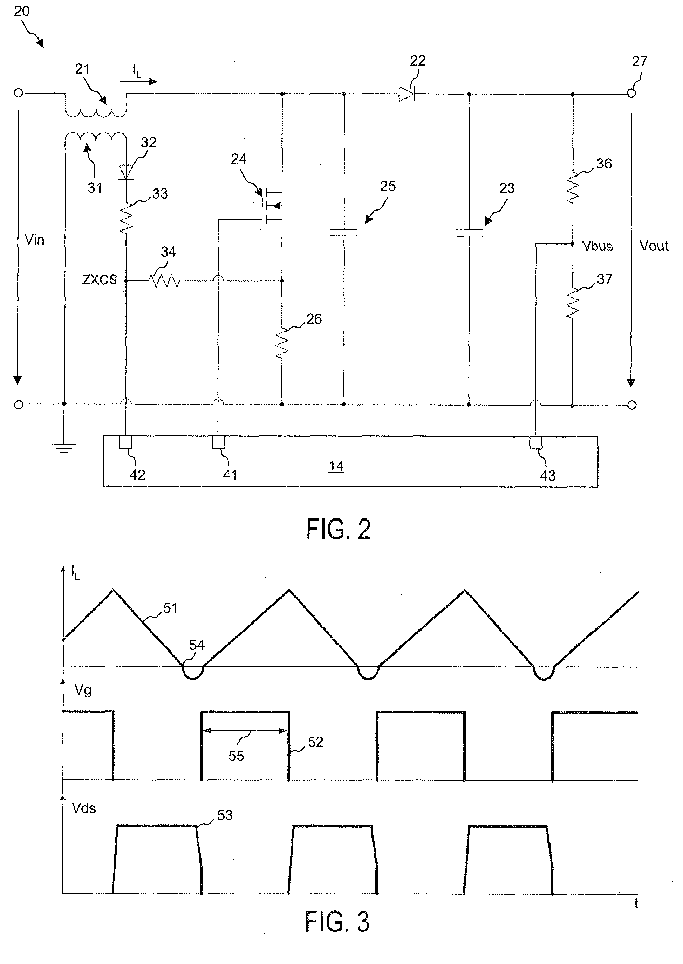

Die Funktionsweise der Leistungsfaktorkorrekturschaltung und ihrer Steuereinrichtung 14 wird unter Bezugnahme auf FIG. 2-10 ausführlicher beschrieben. Allgemein kann die Steuereinrichtung 14 die Leistungsfaktorkorrekturschaltung in mehrere Betriebsmodi steuern, die wenigstens einen DCM ("Discontinuous Conduction Mode")- Betriebsmodus als ersten Betriebsmodus und einen zweiten Betriebsmodus umfassen. Der zweite Betriebsmodus kann ausgewählt sein aus einem CCM ("Continuous Conduction Mode")-Betriebsmodus und einem BCM ("Borderline Conduction Mode" oder "Boundary Conduction Mode")-Betriebsmodus. Im ersten Betriebsmodus kann eine Anpassung an unterschiedliche Last bzw. unterschiedliche Ausgangsleistung dadurch erreicht werden, dass eine Mindestwartezeit eingestellt wird, die zwischen dem Ausschalten eines Schaltmittels und dem erneuten Einschalten vergehen muss. Die Steuereinrichtung 14 steuert dabei das Schaltmittel so, dass nicht nur der Ablauf der Mindestwartezeit in das Kriterium zum Einschalten des Schaltmittels eingeht, sondern zusätzlich das zeitabhängige Verhalten der Leistungsfaktorkorrekturschaltung berücksichtigt wird. Das Schaltmittel kann abhängig davon wieder eingeschaltet werden, ob die Mindestwartezeit abgelaufen und eine Drain-Source-Spannung des Schaltmittels ein bestimmtes Kriterium erfüllt. Das Kriterium kann beinhalten, dass die Drain-Source-Spannung des Schaltmittels einen lokalen Minimalwert als Funktion der Zeit erreicht. Dieses Kriterium kann überprüft werden, indem der Steuereinrichtung 14 eine Größe zugeführt wird, die Informationen über Nulldurchgänge des Stroms in einer Spule der Leistungsfaktorkorrekturschaltung beinhaltet.

FIG. 2 ist ein Schaltbild der Leistungsfaktorkorrekturschaltung 20 nach einem Ausführungsbeispiel. Eine Versorgungs-Wechselspannung, beispielsweise die Netzspannung, wird von einem (in FIG. 2 nicht dargestellten) Gleichrichter in eine gleichgerichtete Wechselspannung umgesetzt, die als Eingangs-Wechselspannung Vin zwischen einem Eingangsanschluss der Leistungsfaktorkorrekturschaltung 20 und Masse anliegt. Die Eingangs-Wechselspannung Vin wird einer Induktivität oder Spule 21 zugeführt. Die Induktivität 21 ist mit einer Diode 22 zwischen den Eingangsanschluss und einen Ausgangsanschluss 27 der Leistungsfaktorkorrekturschaltung 20 in Serie geschaltet. An dem mit einem Ladekondensator 23 gekoppelten Ausgangsanschluss 27 wird eine Ausgangs-Gleichspannung Vout bereitgestellt. Zwischen die Induktivität 21 und Masse kann ein weiterer Kondensator 25 geschaltet sein, der parallel zu einer Serienschaltung aus Schalter 24 und Widerstand 26 geschaltet ist. Der Kondensator 25 kann mit demselben Anschluss der Diode 22 verbunden sein, mit dem auch die Induktivität 21 verbunden ist.

Die Ausgangs-Gleichspannung Vout dient zur Versorgung einer Last, der die Leistungsfaktorkorrekturschaltung 20 vorgeschaltet ist. Bei der Last kann es sich beispielsweise um Komponenten eines Betriebsgeräts für ein Leuchtmittel wie beispielsweise eine Leuchtstofflampe, eine Halogen-Lampe, eine Leuchtdiodenanordnung etc. handeln. Die Last kann einen LLC-Resonanzwandler mit Potentialtrennung umfassen.

An die Verbindung zwischen der Induktivität 21 und der Diode 22 ist ein steuerbarer elektronischer Schalter 24, der ein Leistungsschalter ist und der beispielsweise als Feldeffekttransistor (FET), insbesondere als MOSFET, ausgebildet sein kann, angeschlossen. Der Schalter 24 kann über einen Widerstand 26 mit Masse verbunden sein, wobei der Widerstand 26 als Shunt-Widerstand dienen kann. Der Schalter 24 wird von der Steuereinrichtung 14 der Leistungsfaktorkorrekturschaltung 20 in den Ein-Zustand und den Aus-Zustand geschaltet. Die Steuereinrichtung 14 weist einen entsprechenden Ausgang 41 zum Aussteuern eines Steuersignals auf, mit dem beispielsweise die Gatespannung des Schalters 24 kontrolliert werden kann.

Im eingeschalteten Zustand des Schalters 24 ist die Induktivität 21 über den Schalter 24 mit Masse verbunden, wobei die Diode 8 sperrt, so dass die Induktivität 21 aufgeladen und Energie in der Induktivität 21 gespeichert wird. Ist hingegen der Schalter 24 ausgeschaltet, d.h. offen, ist die Diode 22 leitend, so dass sich die Induktivität 21 über die Diode 22 in den Ladekondensator 23 entladen kann und die in der Induktivität 21 gespeicherte Energie in den Ladekondensator 23 übertragen wird.

Der Schalter 24 wird von einer Steuereinrichtung 14 angesteuert, die in Form einer integrierten Schaltung, insbesondere als ASIC, ausgestaltet sein kann. Die Leistungsfaktorkorrektur wird durch wiederholtes Ein- und Ausschalten des Schalters 24 erzielt, wobei die Schaltfrequenz für den Schalter 24 viel größer als die Frequenz der gleichgerichteten Eingangs-Wechselspannung Vin ist. Die Leistungsfaktorkorrekturschaltung 20 kann als Boost-Konverter arbeiten.

Der Steuereinrichtung 14 können verschiedene Messgrößen zugeführt werden, die zur Steuerung oder Regelung der Leistungsfaktorkorrekturschaltung 20 oder anderer Komponenten des Betriebsgeräts ausgewertet werden können. Beispielsweise kann die Steuereinrichtung 14 über einen Spannungsteiler mit Widerständen 36, 37 die Ausgangsspannung erfassen.

Der Steuereinrichtung 14 kann auch eine Messgröße zugeführt werden, die anzeigt, wann ein Strom I_{L} in der Induktivität 21 einen Nulldurchgang aufweist bzw. mit welchem Vorzeichen der Nulldurchgang erfolgt. Die entsprechende Erfassungsschaltung kann eine Windung 31 oder kleine Spule 31, die induktiv mit der Induktivität 21 gekoppelt ist, aufweisen. Die Windung 31 ist über eine Diode 32 und einen Widerstand 33 mit einem Knoten verbunden, der über einen weiteren Widerstand 34 mit einem Knoten zwischen dem Schalter 24 und dem Widerstand 26 verbunden ist. Das Signal am Eingang 42 der Steuereinrichtung 14 zeigt Nulldurchgänge des Stroms I_{L} in der Induktivität 21 insbesondere in den Zeitperioden, in denen der Schalter 24 in den Aus-Zustand geschaltet ist, an.

Die Steuereinrichtung 14 erzeugt ein Steuersignal, um den Schalter 24 in den Ein-Zustand bzw. den Aus-Zustand zu schalten. Dies kann auf unterschiedliche Weise geschehen, insbesondere abhängig von einer Last bzw. Ausgangsleistung. Bei höheren Lasten bzw. Ausgangsleistungen wird ein zweiter Betriebsmodus verwendet, der ein BCM-Betrieb oder CCM-Betrieb sein kann. Die Zeitdauer, während der der Schalter 24 jeweils eingeschaltet wird, kann dabei eingestellt werden, um die Ausgangsspannung auf einem Sollwert zu halten. Die Zeitdauer, während der der Schalter 24 jeweils eingeschaltet wird, kann abhängig von einer Last bzw. Ausgangsleistung am Ausgang 27 gewählt werden. So lange die Last bzw. Ausgangsleistung größer als ein Schwellenwert ist, kann durch Erniedrigung der Ein-Zeit, d.h. Zeitdauer, während der der Schalter 24 jeweils eingeschaltet wird, eine Anpassung des Betriebs vorgenommen werden. Wenn die Last bzw. Ausgangsleistung den Schwellenwert erreicht, kann ein erster Betriebsmodus aktiviert werden, der ein DCM-Betrieb ist. Dabei wird nach dem Schalten des Schalters 24 in den Aus-Zustand nicht unmittelbar der Schalter 24 wieder eingeschaltet, wenn der Strom I_{L} in der Induktivität 21 auf Null abgefallen ist, sondern es ist eine bestimmte Mindestwartezeit vorgesehen. Die Ein-Zeit kann im DCM-Betrieb auf einem vorgegebenen festen Wert gehalten werden, der der kleinste im BCM-Betrieb für die Ein-Zeit wählbare Wert sein kann. Eine Anpassung an unterschiedliche Lasten bzw. Ausgangsleistungen kann im ersten Betriebsmodus, d.h. im DCM-Betrieb, durch Anpassung der Mindestwartezeit erfolgen.

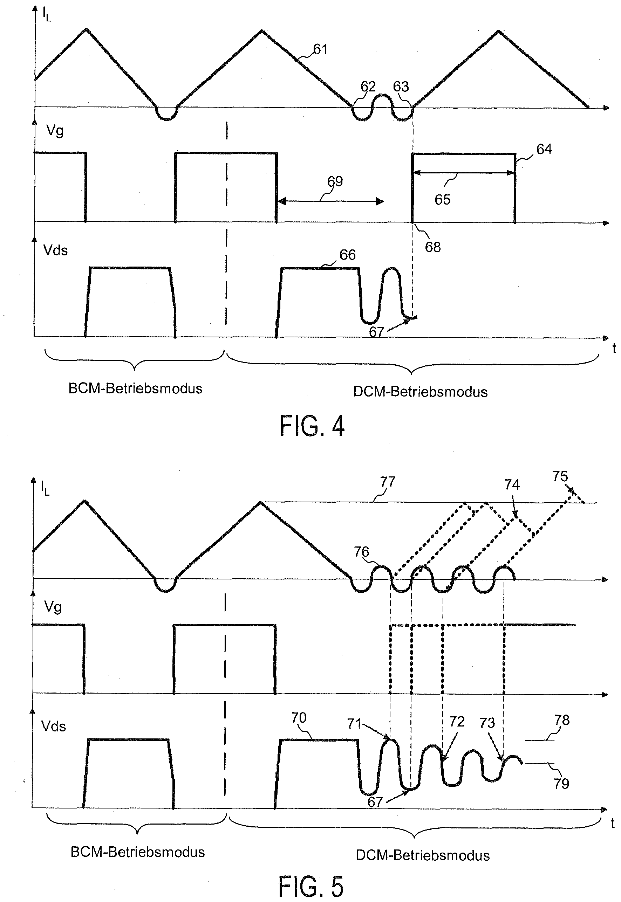

Wie unter Bezugnahme auf FIG. 4, 5, 7 und 8 noch ausführlicher beschrieben wird, wird im ersten Betriebsmodus, d.h. im DCM-Betrieb, ein Einschaltzeitpunkt für den Schalter nicht nur entsprechend der Mindestwartezeit festgelegt, sondern auch abhängig von dem zeitabhängigen Verhalten des Stroms I_{L} durch die Induktivität 21 und abhängig von dem zeitabhängigen Verhalten der Spannung, die zwischen Drain-Anschluss und Source-Anschluss des Schalters 24 abfällt.

FIG. 3 illustriert die Steuerung der Leistungsfaktorkorrekturschaltung 20 durch die Steuereinrichtung 14 in dem zweiten Betriebsmodus, der beispielhaft als BCM-Betrieb dargestellt ist. Durch die Gatespannung Vg am Schalter 24 wird der Schalter in den Ein-Zustand und in den Aus-Zustand geschaltet. Wenn der Schalter in den Aus-Zustand geschaltet wird, entlädt sich die Induktivität 21 und der Spulenstrom 51 nimmt ab. Im BCM-Betrieb kann ein neuer Einschaltvorgang dadurch ausgelöst werden, dass der Strom 51 bei 54 auf Null abfällt oder einen Nulldurchgang aufweist. Durch das entsprechende Steuersignal 52 wird der Schalter 24 dann wieder eingeschaltet, um die Induktivität 21 erneut zu laden. Im BCM-Betrieb kann die Ein-Zeit 55 angepasst werden, um die Busspannung für unterschiedliche Lasten und/oder Ausgangsleistungen stabil zu halten. Ebenfalls in FIG. 3 dargestellt ist die Spannung 53, die zwischen Drain-Anschluss und Source-Anschluss des Schalters 24 im BCM-Betrieb abfällt.

Während in FIG. 3 beispielhaft ein BCM-Betrieb illustriert ist, kann der zweite Betriebsmodus, der bei größeren Lasten und/oder größeren Ausgangsleistungen aktiviert werden kann, auch ein CCM-Betrieb sein. Im CCM-Betrieb kann das Einschalten des Schalters 24 ausgelöst werden, wenn der Strom I_{L} durch die Induktivität 21 einen von Null verschiedenen Referenzwert erreicht.

FIG. 4 illustriert den Übergang vom zweiten Betriebsmodus zum ersten Betriebsmodus, d.h. zum DCM-Betrieb. Durch eine geeignete Wahl des Einschaltzeitpunkts 68, an dem der Schalter 24 wieder in den Ein-Zustand geschaltet wird, können Irregularitäten im Spulenstrom I_{L} verringert oder eliminiert werden, und die Dissipation im Schalter 24 und somit das Erwärmen des Schalters 24 kann verringert gehalten werden.

Im ersten Betriebsmodus, d.h. im DCM-Betrieb, kann die Steuereinrichtung 14 eine Mindestwartezeit 69 vor dem erneuten Schalten des Schalters 24 in den Ein-Zustand festlegen. Der Einschaltzeitpunkt 68, an dem der Schalter 24 wieder in den Ein-Zustand geschaltet wird, fällt nicht notwendig unmittelbar mit dem Ende der Mindestwartezeit 69 zusammen. Der Einschaltzeitpunkt 68 wird so festgelegt, dass die Mindestwartezeit 69 abgelaufen ist und zusätzliche Kriterien erfüllt sind, die vom zeitabhängigen Verhalten der Leistungsfaktorkorrekturschaltung 20 abhängen. Die zusätzlichen Kriterien, die zum Festlegen des Einschaltzeitpunkts 68 verwendet werden, können beinhalten, dass der Strom 61 durch die Induktivität einen Nulldurchgang aufweist und dass die Spannung 66, die im ersten Betriebszustand zwischen Drain-Anschluss und Source-Anschluss des Schalters 24 abfällt, ein lokales Minimum 67 erreicht.

Das Vorliegen der Kriterien, die den Strom 61 durch die Induktivität 21 und die Spannung 66 am Schalter 24 betreffen, kann bei der Leistungsfaktorkorrekturschaltung 20 von FIG. 2 basierend auf dem Signal am Eingang 42 der Steuereinrichtung überprüft werden. Dieses Signal gibt Informationen über das Vorliegen eines Nulldurchgangs des Stroms 61 durch die Induktivität 21 und das Vorzeichen des Nulldurchgangs, so dass ermittelt werden kann, ob die Drain-Source-Spannung am Schalter 24 gerade an einem lokalen Maximum oder einem lokalen Minimum ist.

Die Anwendung dieser Kriterien führt dazu, dass nach dem Ausschalten des Schalters nicht bei einem ersten Nulldurchgang 62 des Stroms 61 der Schalter wieder eingeschaltet wird. Die Induktivität 21 und Kapazität 25 der Leistungsfaktorkorrekturschaltung 20 bilden einen Resonanzkreis, so dass nach Abfall des Stroms 61 der Spulenstrom 61 Schwingungen zeigt, so lange der Schalter 24 im Aus-Zustand bleibt. Im dargestellten Beispiel erfolgt das erneute Schalten des Schalters 24 in den Ein-Zustand auch nicht beim zweiten Nulldurchgang des Stroms 61, da die Mindestwartezeit 69 noch nicht abgelaufen ist. Im dargestellten Beispiel erfolgt das erneute Schalten des Schalters 24 in den Ein-Zustand auch nicht beim dritten Nulldurchgang des Stroms 61, da zwar die Mindestwartezeit 69 abgelaufen, die Richtung des Nulldurchgangs aber so ist, dass sie einem lokalen Maximum der Spannung am Schalter entspricht. Der Einschaltzeitpunkt 68 wird durch den Nulldurchgang 63 bestimmt, bei dem die zwischen Drain-Anschluss und Source-Anschluss des Schalters 24 abfallende Spannung ein lokales Minimum aufweist.

Durch die genannten Kriterien werden mehrere Wirkungen erreicht. Durch Einstellen der Mindestwartezeit 69 kann eine Anpassung an unterschiedliche Lasten und/oder Ausgangsleistungen auch erfolgen, wenn eine Anpassung durch weitere Verringerung der Ein-Zeit 55 bzw. 65 nicht mehr oder nur mit Schwierigkeiten möglich ist. Ein Überschreiten eines gewünschten Peakwerts für den Strom I_{L} durch die Induktivität 21 kann vermindert werden, und der bei jedem Einschalten des Schalters erzielte Peakwert des Stroms I_{L} durch die Induktivität 21 kann auf einem konsistenten Sollwert gehalten werden. Durch Schalten am lokalen Minimum bzw. Tal der Spannung, die zwischen Drain-Anschluss und Source-Anschluss des Schalters 24 abfällt, kann die Dissipation und somit das Erhitzen des Schalters 24 im Vergleich zu einem Betrieb, bei dem immer unmittelbar bei Ablauf einer fixen Wartezeit geschaltet wird, verringert werden.

FIG. 5 illustriert diese Wirkungen. Die Induktivität 21 und Kapazität 25 der Leistungsfaktorkorrekturschaltung 20 bilden einen Resonanzkreis, so dass nach Ausschalten des Schalters der Spulenstrom 69 durch die Induktivität 21 und die Spannung 70 am Schalter 24 Oszillationen zeigen, die eine Phasenverschiebung zueinander aufweisen.

Falls der Schalter 24 bei einem Zeitpunkt wieder eingeschaltet werden würde, bei dem die Drain-Source-Spannung 70 am Schalter 24 nicht extremal ist und beispielsweise der Eingangsspannung 79 entspricht, hätte der Strom I_{L} durch die Induktivität 21 beim Einschalten des Schalters einen um einen bestimmten Wert zur Nulllinie verschobenen Wert. Ein Schalten des Schalters 24 in den Ein-Zustand zu diesem Zeitpunkt würde dazu führen, dass beim nachfolgenden Laden der Induktivität 21 ein Peakwert 74 oder ein Peakwert 75 des Stroms I_{L} resultiert, der einen Sollwert 77 für den Peakstrom nicht erreicht oder überschießt.

Falls der Schalter 24 bei einem Zeitpunkt wieder eingeschaltet werden würde, bei dem die Drain-Source-Spannung 70 am Schalter 24 ein lokales Maximum 71 aufweist, an dem die Spannung beispielsweise gleich der Busspannung 78 ist, würde immer noch ein konsistenter Peakwert des Stroms durch die Induktivität 21 erreicht werden. Allerdings würde das lokale Spannungsmaximum beim Einschalten des Schalters 24 zu einer erhöhten Dissipation und somit zu erhöhter Erwärmung führen.

Durch das Schalten am lokalen Minimum bzw. "Tal" 67 der Drain-Source-Spannung 70 am Schalter 24 wird erreicht, dass der Peakwert des Stroms durch die Induktivität den Sollwert 77 erreicht und die Dissipation beim Schalten kleiner bleibt als bei einem Schalten an einem der Punkte 71-73.

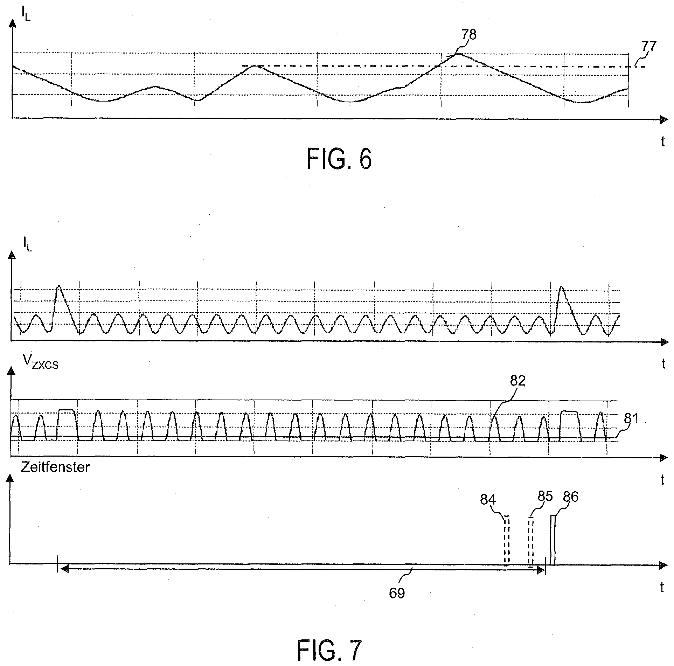

FIG. 6 illustriert zur weiteren Veranschaulichung der Wirkungen der Leistungsfaktorkorrekturschaltung zum Vergleich den Strom I_{L} durch die Induktivität, der resultieren würde, wenn beispielsweise nach einer Änderung der Wartezeit im DCM-Betrieb unabhängig vom zeitabhängigen Verhalten der Leistungsfaktorkorrekturschaltung der Schalter am Ende der Wartezeit sofort wieder in den Ein-Zustand geschaltet werden würde. Im illustrierten Fall zeigt der Strom einen Peakwert 75, der einen Sollwert 77 übersteigt. Ein derartiges irreguläres Verhalten des Stroms kann bei Ausführungsbeispielen reduziert oder unterbunden werden, bei denen zusätzlich zur Mindestwartezeit auch Kriterien für den Einschaltzeitpunkt berücksichtigt werden, die vom dynamischen Verhalten der Leistungsfaktorkorrekturschaltung 20 abhängen.

Bei der Leistungsfaktorkorrekturschaltung 20 wird am Eingang 42 der Steuereinrichtung ein Signal bereitgestellt, das Informationen darüber gibt, ob der Strom I_{L} durch die Spule einen Nulldurchgang aufweist und ob die Drain-Source-Spannung am Schalter 24 gerade ein lokales Maximum oder ein lokales Minimum bzw. Tal aufweist. Dieses Signal wird von der Steuereinrichtung 14 ausgewertet. Die Steuereinrichtung 14 kann abhängig von dem Signal am Eingang 42 Zeitfenster für ein Einschalten des Schalters 24 erzeugen. Die Steuereinrichtung 42 kann diese Zeitfenster mit einer Überprüfung, ob die Mindestwartezeit 69 bereits abgelaufen ist, logisch kombinieren, um zu ermitteln, wann der Schalter 24 in den Ein-Zustand geschaltet werden soll. Die Zeitfenster können jeweils so erzeugt werden, dass sie von einem Nulldurchgang des Stroms I_{L} in einer bestimmten Richtung ausgelöst werden. Die Dauer der Zeitfenster kann einen vorgegebenen Wert aufweisen. Dieser kann beispielsweise gleich einer im zweiten Betriebsmodus einstellbaren minimalen Ein-Zeit des Schalters 24 sein.

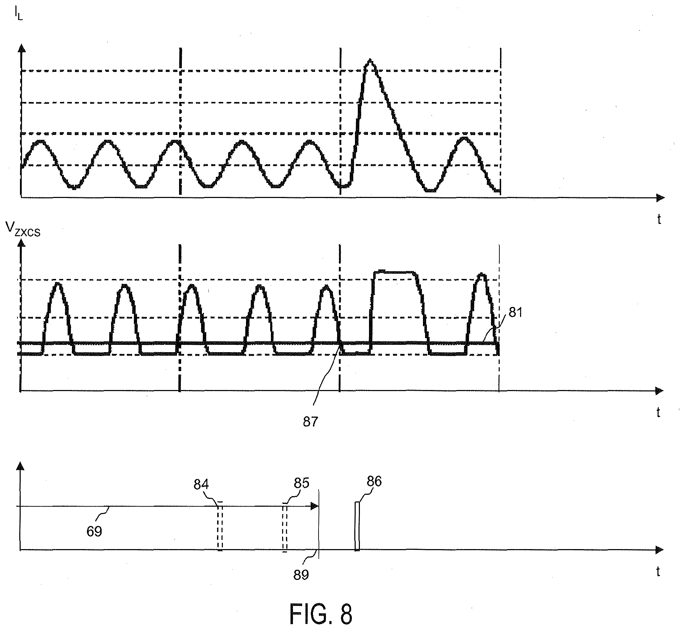

FIG. 7 und FIG. 8 illustrieren die Bestimmung des Zeitpunkts, an dem der Schalter im ersten Betriebsmodus wieder in den Ein-Zustand geschaltet wird. Während der Schalter 24 im Aus-Zustand ist, führt der Strom I_{L} durch die Induktivität 21 Oszillationen um eine Nulllinie aus, die durch den aus Induktivität 21 und Kapazität 25 gebildeten Resonanzkreis bedingt sind. Diese Oszillationen sind entsprechend im Signal 82 am Eingang 42 der Steuereinrichtung 14 erkennbar. Zeitpunkte, an denen der Strom I_{L} durch die Induktivität 21 jeweils einen Nulldurchgang aufweist, sind durch Vergleich des Signals 82 mit einem Referenzwert 81 erkennbar. Die Steuereinrichtung 14 kann beispielsweise einen Komparator umfassen, dem eingangsseitig das Signal 82 und der Referenzwert 81 zugeführt werden. Sprünge im Ausgangssignal des Komparators zeigen Zeitpunkt und Richtung des Nulldurchgangs des Stroms I_{L} durch die Induktivität 21 an.

Basierend auf den erkannten Nulldurchgängen des Stroms I_{L} durch die Induktivität 21, die einen Vorzeichenwechsel in vorgegebener Richtung aufweisen, werden jeweils Zeitfenster generiert, von denen nur Zeitfenster 84-86 dargestellt sind. Diese Zeitfenster entsprechen den Zeiten, zu denen basierend auf dem zeitabhängigen Verhalten des Stroms durch die Induktivität 21 und der Drain-Source-Spannung am Schalter 24 ein Einschalten des Schalters 24 erfolgen sollte. Diese Zeitfenster sind abhängig davon gewählt, dass sich die Drain-Source-Spannung am Schalter 24 jedenfalls nahe an einem lokalen Minimum befindet und dass der Strom durch die Induktivität 21 jedenfalls in der Nähe eines Nulldurchgangs ist.

Als zusätzliches Kriterium wird berücksichtigt, dass die Mindestwartezeit 69 abgelaufen sein muss. Da die Zeitfenster 84, 85 vor einem Ende 89 der Mindestwartezeit 69 liegen, wird der Schalter 24 noch nicht erneut in den Ein-Zustand geschaltet. Der Schalter 24 kann aber beispielsweise beim ersten Zeitfenster 86, das nach dem Ende 89 der Mindestwartezeit liegt, wieder in den Ein-Zustand geschaltet werden. Der Einschaltzeitpunkt wird abhängig davon festgelegt, ob das Ende 89 der Mindestwartezeit bereits verstrichen ist, wenn bei einem Zeitpunkt 87 das Signal am Eingang 42 der Steuereinrichtung 14 den Referenzwert 81 erreicht.

Bei der Leistungsfaktorkorrekturschaltung und Verfahren nach Ausführungsbeispielen kann im ersten Betriebsmodus die Steuereinrichtung eine Wartezeit so anpassen, dass sie mindestens gleich einer vorgegebenen Mindestwartezeit ist und darüber hinaus von der zeitabhängigen Drain-Source-Spannung am Schalter 24 abhängt, die über einen Eingang der Steuereinrichtung erfasst wird, dem ein Signal zugeführt wird, das Nulldurchgänge des Spulenstroms anzeigt.

Abhängig davon, ob die Steuereinrichtung 14 im ersten Betriebsmodus oder im zweiten Betriebsmodus arbeitet, kann die Steuereinrichtung 14 automatisch unterschiedliche Maßnahmen ergreifen, um das Verhalten der Leistungsfaktorkorrekturschaltung 20 zu kontrollieren. Eine derartige Anpassung kann beispielsweise erfolgen, um die Ausgangsspannung Vout auf einen Sollwert nachzuregeln. Eine Anpassung kann auch erfolgen, um abhängig von der Last bzw. Ausgangsleistung die Steuerung der Leistungsfaktorkorrekturschaltung 20 so anzupassen, dass Oberwellen gut unterdrückt werden. Falls eine lastbasierte Anpassung erfolgt, kann die Steuereinrichtung 14 die Last beispielsweise basierend auf einer Welligkeit, d.h. basierend auf den Spannungsrippeln der Ausgangsspannung Vout erkennen. Dazu kann die Ausgangsspannung Vout erfasst und der Steuereinrichtung 14 zugeführt werden.

Der zweite Betriebsmodus, der beispielsweise einem BCM-Betrieb oder CCM-Betrieb entsprechen kann, kann bei Lasten bzw. Ausgangsleistungen aktiviert werden, die größer als ein Schwellenwert ist. Im BCM-Betrieb oder CCM-Betrieb kann über die Ein-Zeit des Schalters, d.h. die Zeitdauer, während der der Schalter 24 jeweils in den Ein-Zustand geschaltet ist, eine Anpassung an unterschiedliche Lasten oder unterschiedliche Ausgangsleistungen erfolgen. Für kleinere Last oder kleinere Ausgangsleistung kann die Ein-Zeit entsprechend verringert werden, bis sie einen zulässigen Minimalwert erreicht. Falls eine weitere Verringerung der Ein-Zeit nicht mehr möglich ist, kann ein Übergang in den DCM-Betrieb erfolgen.

Im ersten Betriebsmodus, beispielsweise im DCM-Betrieb, kann die Ein-Zeit auf einem fixen Wert gehalten werden. Dieser kann dem zulässigen Minimalwert für die Ein-Zeit entsprechen, der im zweiten Betriebsmodus einstellbar ist. Im ersten Betriebsmodus kann eine Anpassung des Betriebs der Leistungsfaktorkorrekturschaltung durch Änderung der Mindestwartezeit erfolgen.

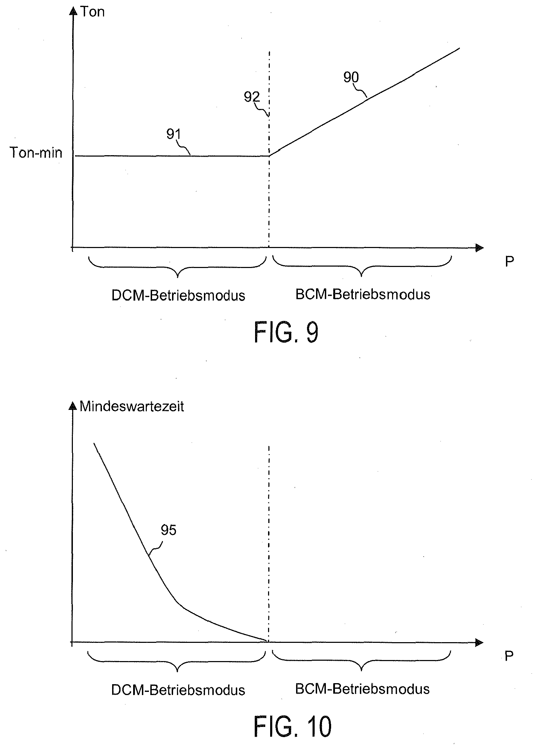

FIG. 9 und FIG. 10 illustrieren die Anpassung des Betriebs der Leistungsfaktorkorrekturschaltung durch Änderung von Parametern, die das Ansteuern des Schalters 24 beeinflussen. Die Anpassung kann beispielsweise als Funktion der Ausgangsleistung der Leistungsfaktorkorrekturschaltung oder Last erfolgen.

FIG. 9 zeigt die Ein-Zeit des Schalters, d.h. die Zeitdauer, während der der Schalter 24 jeweils in den Ein-Zustand geschaltet ist. Wenn die Ausgangsleistung ausgehend von einem höheren Wert, bei dem die Leistungsfaktorkorrekturschaltung im BCM- oder CCM-Betriebsmodus betrieben wird, erniedrigt wird, entspricht dies einer entsprechenden Verringerung der Ein-Zeit des Schalters bis auf einen zulässigen minimalen Wert. Bei einer weiteren Verringerung der Leistung kann der Übergang in den DCM-Betriebsmodus erfolgen. Die Ein-Zeit kann dabei auf einem konstanten Wert 91 gehalten werden, der dem für den zweiten Betriebsmodus von der Steuereinrichtung minimal einstellbaren Wert für die Ein-Zeit entspricht. Im zweiten Betriebsmodus kann eine lastabhängige Einstellung der Mindestwartezeit erfolgen. Fig. 10 zeigt beispielhaft den Verlauf einer Kennlinie, die zur Anpassung der Mindestwartezeit im DCM-Betrieb verwendet werden kann. Die Kennlinien, wie sie in FIG. 9 und FIG. 10 dargestellt sind, kann beispielsweise bei digitaler Ausgestaltung der Steuereinrichtung 14 in Form einer entsprechenden Tabelle in der Steuereinrichtung 14 hinterlegt sein.

Während Ausführungsbeispiele unter Bezugnahme auf die Figuren beschrieben wurden, können Abwandlungen bei weiteren Ausführungsbeispielen realisiert werden. Während beispielsweise ein Übergang vom BCM-Betrieb in den DCM-Betrieb beschrieben wurde, kann bei weiteren Ausführungsbeispielen die Steuereinrichtung für eine Ansteuerung im CCM-Betriebsmodus ausgestaltet sein. Es kann entsprechend ein lastabhängiger Übergang vom CCM-Betrieb zum DCM-Betrieb erfolgen.

Während Ausführungsbeispiele beschrieben wurden, bei denen der Strom durch die Induktivität induktiv unter Verwendung einer Spule oder Windung erfasst wird, können andere Schaltungen vorgesehen sein, um Nulldurchgänge des Stroms und/oder lokale Extrema der Drain-Source-Spannung des steuerbaren Schalters zu erkennen. Während Ausführungsbeispiele beschrieben wurden, bei denen ein lokales Minimum bzw. Tal der Drain-Source-Spannung des steuerbaren Schalters basierend auf einem Eingangssignal der Steuereinrichtung detektiert wird, das Nulldurchgänge des Stroms in der Induktivität anzeigt, können auch andere Anordnung verwendet werden, die der Steuereinrichtung erlauben, ein lokales Extremum der Drain-Source-Spannung des steuerbaren Schalters zu erkennen.

Verfahren und Vorrichtungen nach Ausführungsbeispielen können bei Betriebsgeräten für Leuchtmittel, beispielsweise bei einem elektronischen Vorschaltgerät oder bei einem LED-Konverter, verwendet werden.

## Patentansprüche

1. Verfahren zum Steuern einer Leistungsfaktorkorrekturschaltung (11, 14; 20) für ein Leuchtmittel (3), wobei die Leistungsfaktorkorrekturschaltung (11, 14; 20) eine mit einem Eingang gekoppelte Induktivität (21) und ein mit der Induktivität (21) gekoppeltes steuerbares Schaltmittel (24) aufweist, um durch Schließen und Öffnen des Schaltmittels (24) die Induktivität (21) wahlweise zu laden und zu entladen, wobei das Verfahren umfasst:
- Auswählen eines Betriebsmodus zum Steuern des Schaltmittels (24) aus einer Mehrzahl von Betriebsmodi, und
- Steuern des Schaltmittels (24) gemäß dem ausgewählten Betriebsmodus, wobei, wenn der ausgewählte Betriebsmodus ein erster Betriebsmodus ist, eine Mindestwartezeit (69) zwischen dem Ausschalten des Schaltmittels (24) und einem erneuten Einschalten des Schaltmittels (24) bestimmt wird,
**dadurch gekennzeichnet,**
**dass** ein Einschaltzeitpunkt (68) für das Schaltmittel (24) abhängig von der Mindestwartezeit (69) und abhängig von einer über das Schaltmittel (24) abfallenden Spannung (66; 70) festgelegt wird, wenn der ausgewählte Betriebsmodus der erste Betriebsmodus ist.

2. Verfahren nach Anspruch 1,
wobei in dem ersten Betriebsmodus der Einschaltzeitpunkt (68) abhängig von einem zeitlichen Verlauf der über das Schaltmittel (24) abfallenden Spannung (66; 70) festgelegt wird.

3. Verfahren nach Anspruch 1 oder Anspruch 2,
wobei in dem ersten Betriebsmodus wenigstens ein Zeitfenster (84-86) abhängig von einem Zeitpunkt bestimmt wird, bei dem die über das Schaltmittel (24) abfallende Spannung (66; 70) ein lokales Extremum, insbesondere ein lokales Minimum (67), aufweist.

4. Verfahren nach Anspruch 3,
wobei eine Messgröße (66, 76, 81), die einen durch die Induktivität (21) fließenden Strom (66, 76) oder einen Nulldurchgang des durch die Induktivität (21) fließenden Stroms (66, 76) anzeigt, mit einem Referenzwert (82) verglichen und abhängig von einem Ergebnis des Vergleichs ermittelt wird, ob die über das Schaltmittel (24) abfallende Spannung (66; 70) ein lokales Extremum, insbesondere ein lokales Minimum (67), aufweist.

5. Verfahren nach Anspruch 4,
wobei das wenigstens eine Zeitfenster (84-86) abhängig von einem Zeitpunkt bestimmt wird, bei dem eine Differenz zwischen der Messgröße (81) und dem Referenzwert (82) einen Vorzeichenwechsel in einer vorgegebenen Richtung aufweist.

6. Verfahren nach Anspruch 4 oder Anspruch 5,
wobei der Referenzwert (82) so gewählt wird, dass er einen Nulldurchgang des durch die Induktivität (21) fließenden Stroms (66, 76) anzeigt.

7. Verfahren nach einem der Ansprüche 3-6,
wobei das wenigstens ein Zeitfenster (84-86) zum Einschalten des Schaltmittels (24) so bestimmt wird, dass das Schaltmittel (24) wieder eingeschaltet wird, wenn eine über eine Drain-Source-Strecke des Schaltmittels (24) abfallende Spannung (66; 70) ein lokales Minimum (67) erreicht.

8. Verfahren nach einem der vorhergehenden Ansprüche,
wobei die Mindestwartezeit (69) abhängig von der Last am Ausgang (22) der Leistungsfaktorkorrekturschaltung (11, 14; 20) oder abhängig von einer Ausgangsleistung bestimmt wird.

9. Verfahren nach einem der vorhergehenden Ansprüche,
wobei in einem zweiten Betriebsmodus ein Einschaltzeitpunkt (68), an dem das Schaltmittel (24) eingeschaltet wird, unabhängig von der Mindestwartezeit (69) festgelegt wird.

10. Verfahren nach Anspruch 9,
wobei der erste Betriebsmodus ein DCM- Betriebsmodus und der zweite Betriebsmodus ein CCM-Betriebsmodus oder BCM-Betriebsmodus ist.

11. Verfahren nach einem der vorhergehenden Ansprüche,
wobei der erste Betriebsmodus nur aktiviert wird, wenn die Last oder eine Ausgangsleistung kleiner als ein Schwellenwert (92) ist.

12. Leistungsfaktorkorrekturschaltung (11, 14; 20) für ein Leuchtmittel (3), umfassend
eine Induktivität (21), die mit einem Eingang der Leistungsfaktorkorrekturschaltung (11, 14; 20) gekoppelt ist,
ein steuerbares Schaltmittel (24), das mit der Induktivität (21) gekoppelt ist, und
eine Steuereinrichtung (14) zum Steuern des Schaltmittels (24), um durch das Steuern des Schaltmittels (24) die Induktivität (21) wahlweise zu laden und zu entladen, wobei die Steuereinrichtung (14) eingerichtet ist, um einen Betriebsmodus aus mehreren Betriebsmodi auszuwählen und das Schaltmittel (24) gemäß dem ausgewählten Betriebsmodus zu steuern,
wobei die Steuereinrichtung (14) eingerichtet ist, um in einem ersten Betriebsmodus eine Mindestwartezeit (69) zwischen einem Ausschalten des Schaltmittels (24) und einem erneuten Einschalten des Schaltmittels (24) zu bestimmen, **dadurch gekennzeichnet,**
**dass** die Steuereinrichtung (14) eingerichtet ist, um in dem ersten Betriebsmodus einen Einschaltzeitpunkt (68) für das Schaltmittel (24) abhängig von der Mindestwartezeit (69) und abhängig von einer über das Schaltmittel (24) abfallenden Spannung (66; 70) festzulegen.

13. Leistungsfaktorkorrekturschaltung (11, 14; 20) nach Anspruch 12,
die zur Durchführung des Verfahrens nach einem der Ansprüche 1-11 eingerichtet ist.

14. Betriebsgerät (2) für ein Leuchtmittel (3), umfassend
die Leistungsfaktorkorrekturschaltung (11, 14; 20) nach Anspruch 12 oder Anspruch 13.

## Claims

1. Method for controlling a power factor correction circuit (11, 14; 20) for a luminaire (3), wherein the power factor correction circuit (11, 14; 20) comprises an inductance (21) coupled to an input, and a controllable switching means (24) coupled to the inductance (21) to selectively charge and discharge the inductance (21) by closing and opening the switching means (24), wherein the method comprises:
- selecting an operating mode from a plurality of operating modes in order to control the switching means (24), and
- controlling the switching means (24) according to the selected operating mode,
wherein, when the selected operating mode is a first operating mode, a minimum waiting period (69) between the switching off of the switching means (24) and a switching on again of the switching means (24) is determined,
**characterized in that**
a switching-on time (68) for the switching means (24) is determined as a function of the minimum waiting time (69) and as a function of a voltage (66; 70) across the switching means (24) when the selected operating mode is the first operating mode.

2. The method according to claim 1,
wherein, in the first operating mode, the switching-on time (68) is determined as a function of a temporal profile of the voltage (66; 70) across the switching means (24).

3. The method according to claim 1 or 2,
wherein at least one time window (84-86) is determined in the first operating mode as a function of a point in time at which the voltage (66; 70) across the switching means (24) has a local extremum, in particular a local minimum (67).

4. Method according to claim 3,
wherein a measured value (66, 76, 81) indicating a current (66, 76) flowing through the inductance (21) or a zero crossing of the current (66, 76) flowing through the inductance (21) is compared with a reference value (82) and, as a function of a result of the comparison, determines whether the voltage (66; 70) across the switching means (24) has a local extremum, in particular a local minimum (67).

5. Method according to claim 4,
wherein the at least one time window (84-86) is determined as a function of a point in time at which a difference between the measured value (81) and the reference value (82) has a change of sign in a predetermined direction.

6. Method according to claim 4 or claim 5,
wherein the reference value (82) is selected to indicate a zero crossing of the current (66, 76) flowing through the inductance (21).

7. Method according to one of the claims 3-6,
wherein the at least one time window (84-86) for switching on the switching means (24) is so determined that the switching means (24) are switched on again when a voltage (66; 70) across a drain-source path of the switching means (24) reaches a local minimum (67).

8. Method according to one of the preceding claims,
wherein the minimum waiting time (69) is determined as a function of the load at the output (22) of the power factor correction circuit (11, 14; 20) or as a function of an output power.

9. Method according to one of the preceding claims,
wherein a switching-on time (68) at which the switching means (24) is switched on in a second operating mode, is determined independently of the minimum waiting time (69).

10. Method according to claim 9,
wherein the first operating mode is a DCM operation mode and the second operation mode is a CCM operation mode or a BCM operation mode.

11. Method according to one of the preceding claims,
wherein the first operating mode is only activated when the load or an output power is less than a threshold value (92).

12. Power factor correction circuit (11, 14; 20) for a luminaire (3) comprises:
an inductance (21) coupled to an input of the power factor correction circuit (11, 14; 20), a controllable switching means (24) coupled to the inductance (21), and
a control means (14) to control the switching means (24) for selectively charging and discharging the inductance (21) by controlling the switching means (24), wherein the control means (14) are arranged to select an operating mode from several operating modes, and to control the switching means (24) according to the selected operating mode,
wherein the control device (14) is configured to determine a minimum waiting time (69) between a switching off of the switching means (24) and a switching on again of the switching means (24) in a first operating mode,
**characterized in that**
the control device (14) is configured to determine a switching-on time (68) for the switching means (24) in the first operating mode as a function of the minimum waiting time (69) and as a function of a voltage (66; 70) across the switching means (24).

13. Power factor correction circuit (11, 14; 20) according to claim 12 that is arranged to carry out the method according to one of the claims 1-11.

14. Operating device (2) for a luminaire (3) comprising the power factor correction circuit (11, 14; 20) according to claim 12 or claim 13.

## Revendications

1. Procédé de commande d'un circuit de correction de facteur de puissance (11, 14 ; 20) pour un moyen lumineux (3), le circuit de correction de facteur de puissance (11, 14 ; 20) présentant une inductance (21) couplée à une entrée et un moyen de commutation (24) commandé couplé à l'inductance (21) afin de charger et décharger au choix l'inductance (21) par la fermeture et l'ouverture du moyen de commutation (24), le procédé comprenant :
- la sélection d'un mode de fonctionnement pour la commande du moyen de commutation (24) à partir d'une pluralité de modes de fonctionnement, et
- la commande du moyen de commutation (24) selon le mode de fonctionnement sélectionné, dans lequel, quand le mode de fonctionnement sélectionné est un premier mode de fonctionnement, un temps d'attente minimal (69) est défini entre la mise hors circuit du moyen de commutation (24) et une nouvelle mise en circuit du moyen de commutation (24),
**caractérisé en ce**
**qu'**un moment de mise en circuit (68) pour le moyen de commutation (24) est spécifié en fonction du temps d'attente minimal (69) et en fonction d'une chute de tension (66 ; 70) sur le moyen de commutation (24) quand le mode de fonctionnement sélectionné est le premier mode de fonctionnement.

2. Procédé selon la revendication 1,
dans lequel, dans le premier mode de fonctionnement, le moment de mise en circuit (68) est spécifié en fonction d'une courbe temporelle de la chute de tension (66 ; 70) sur le moyen de commutation (24).

3. Procédé selon la revendication 1 ou la revendication 2,
dans lequel, dans le premier mode de fonctionnement, au moins une fenêtre de temps (84-86) est définie en fonction d'un moment pour lequel la chute de tension (66 ; 70) sur le moyen de commutation (24) présente un extremum local, en particulier un minimum (67) local.

4. Procédé selon la revendication 3,
dans lequel une grandeur de mesure (66, 76, 81) qui indique un courant (66, 76) s'écoulant à travers l'inductance (21) ou un passage par zéro du courant (66, 76) s'écoulant à travers l'inductance (21) est comparée à une valeur de référence (82) et, en fonction d'un résultat de la comparaison, il est déterminé si la chute de tension (66 ; 70) sur le moyen de commutation (24) présente un extremum local, en particulier un minimum (67) local.

5. Procédé selon la revendication 4,
dans lequel la fenêtre de temps (84-86) au moins au nombre de un est définie en fonction d'un moment pour lequel une différence entre la grandeur de mesure (81) et la valeur de référence (82) présente un changement de signe dans une direction prédéfinie.

6. Procédé selon la revendication 4 ou la revendication 5,
dans lequel la valeur de référence (82) est choisie de telle sorte qu'elle indique un passage par zéro du courant (66, 76) s'écoulant à travers l'inductance (21).

7. Procédé selon l'une des revendications 3 à 6,
dans lequel la fenêtre de temps (84-86) au moins au nombre de un pour la mise en circuit du moyen de commutation (24) est définie de telle sorte que le moyen de commutation (24) est remis en circuit quand une chute de tension (66 ; 70) sur un trajet drain-source du moyen de commutation (24) atteint un minimum (67) local.

8. Procédé selon l'une des revendications précédentes, dans lequel le temps d'attente minimal (69) est défini en fonction de la charge à la sortie (22) du circuit de correction de facteur de puissance (11, 14 ; 20) ou en fonction d'une puissance de sortie.

9. Procédé selon l'une des revendications précédentes, dans lequel, dans un deuxième mode de fonctionnement, un moment de mise en circuit (68) auquel le moyen de commutation (24) est mis en circuit est spécifié indépendamment du temps d'attente minimal (69).

10. Procédé selon la revendication 9,
dans lequel le premier mode de fonctionnement est un mode de fonctionnement DCM et le deuxième mode de fonctionnement est un mode de fonctionnement CCM ou un mode de fonctionnement BCM.

11. Procédé selon l'une des revendications précédentes, dans lequel le premier mode de fonctionnement n'est activé que si la charge ou une puissance de sortie est inférieure à une valeur de seuil (92).

12. Circuit de correction de facteur de puissance (11, 14 ; 20) pour un moyen lumineux (3), comprenant
une inductance (21) qui est couplée à une entrée du circuit de correction de facteur de puissance (11, 14 ; 20),
un moyen de commutation (24) commandé qui est couplé à l'inductance (21),
et
un dispositif de commande (14) pour la commande du moyen de commutation (24) afin de charger et décharger au choix l'inductance (21) par la commande du moyen de commutation (24), le dispositif de commande (14) étant aménagé pour sélectionner un mode de fonctionnement parmi plusieurs modes de fonctionnement et pour commander le moyen de commutation (24) suivant le mode de fonctionnement sélectionné,
le dispositif de commande (14) étant aménagé pour, dans un premier mode de fonctionnement, définir un temps d'attente minimal (69) entre une mise hors circuit du moyen de commutation (24) et une nouvelle mise en circuit du moyen de commutation (24),
**caractérisé en ce que**
le dispositif de commande (14) est aménagé pour, dans le premier mode de fonctionnement, spécifier un moment de mise en circuit (68) pour le moyen de commutation (24) en fonction du temps d'attente minimal (69) et en fonction d'une chute de tension (66 ; 70) sur le moyen de commutation (24).

13. Circuit de correction de facteur de puissance (11, 14 ; 20) selon la revendication 12,
qui est aménagé pour la réalisation du procédé selon l'une des revendications 1 à 11.

14. Appareil de commande (2) pour un moyen lumineux (3), comprenant le circuit de correction de facteur de puissance (11, 14 ; 20) selon la revendication 12 ou la revendication 13.
